# EUROPÄISCHE PATENTSCHRIFT

(11) **EP 3 099 415 B1**
(45) Veröffentlichungstag und Bekanntmachung des Hinweises auf die Patenterteilung: **19.09.2018**
(21) Anmeldenummer: 15708698.4
(22) Anmeldetag: 21.01.2015
(51) Int. Cl.: B02C 18/12, B29L 31/00, B29B 9/02, B02C 18/08, B29B 13/10, B29B 17/04

(54) **ZERKLEINERUNGSWERKZEUG**
COMMINUTING TOOL
OUTIL DE FRAGMENTATION

(30) Priorität: 28.01.2014 AT 500552014
(43) Veröffentlichungstag der Anmeldung: 07.12.2016
(73) Patentinhaber: EREMA Engineering Recycling Maschinen und Anlagen Gesellschaft m.b.H., 4052 Ansfelden (AT)
(72) Erfinder: FEICHTINGER, Klaus, A-4040 Linz (AT); HACKL, Manfred, A-4040 Linz-Urfahr (AT); PAULI, Peter, A-4511 Allhaming (AT); WEIGERSTORFER, Georg, A-4030 Linz (Ebelsberg) (AT)
(74) Vertreter: Wildhack & Jellinek
(86) Internationale Anmeldenummer: PCT/AT2015/050020
(87) Internationale Veröffentlichungsnummer: WO 2015/113089

(56) Entgegenhaltungen:
- WO-A1-2011/127508
- WO-A1-2013/052984
- DE-A1- 2 724 417

## Beschreibung

Die Erfindung betrifft ein Zerkleinerungswerkzeug gemäß dem Oberbegriff des Patentanspruchs 1. Derartige Zerkleinerungswerkzeuge werden insbesondere in Schneidverdichtern für die Bearbeitung und Zerkleinerung von Kunststoffmaterialien eingesetzt. Aufgabe derartiger Zerkleinerungswerkzeuge, vorzugsweise Schneid- oder Fräswerkzeuge, ist es, neben dem Energieeintrag in das Material und einer entsprechenden Erhöhung der Enthalpie, das einlangende Material zu zerkleinern und/oder zu vermischen. Als Träger können rotierende Scheiben oder scheibenähnliche bzw. gleiche Funktion erfüllende Träger eingesetzt werden. Üblicherweise werden die Werkzeuge vom Rand bis in den inneren Bereich, d.h. bis zur Drehachse der Scheibe montiert, d.h. auch in jenen Bereichen, in denen die Umfangsgeschwindigkeit der Werkzeuge schon sehr kleine Werte annimmt. Ferner betrifft die Erfindung einen Schneidverdichter mit einem erfindungsgemäßen Zerkleinerungswerkzeug.

Derartige Vorrichtungen sind z.B. aus der Druckschrift US4120460A bekannt. Diese offenbart ein für Kunststoffmaterialien geeignetes Zerkleinerungswerkzeug, wobei das Zerkleinerungswerkzeug zu einer Rotationsbewegung antreibbar ist, und einen Träger umfasst, der um eine auf ihm zentral gelegene Drehachse rotierbar ist und auf dessen Oberfläche Werkzeuge zur Bearbeitung und Zerkleinerung der Kunststoffmaterialien angeordnet sind. Das Zerkleinerungswerkzeug weist steg-oder leistenförmige Förderflügel auf und die Werkzeuge sind in dem an die Förderflügel radial zum Rand des Trägers hin anschließenden Bereich angeordnet.

Untersuchungen zeigten nunmehr, dass bei zu verarbeitenden Blasfolien, Cast-Folien, Bändchen und/oder Fasern insbesondere aus Polyolefinen und anderen Polymeren wie PLA, PS, ABS oder auch PET, PA, usw. die Umfangsgeschwindigkeit der Werkzeuge, insbesondere Schneidmesser, ausreichend hoch sein muss um eine ausreichende Zerkleinerung, d.h. einen Schnitt durch das Material durchführen zu können. Bei diesem Schnittvorgang ist aber kein Gegenmesser vorhanden und somit kann kein definierter Schnittspalt erzeugt werden, sondern es kommt im Wesentlichen auf die Masseträgheit des Materials und auf das Material an, welches auf die zu schneidenden Partikel drückt und damit den Gegendruck für das Werkzeug erzeugt. Wird diese Schnittgeschwindigkeit nicht erreicht, können die eingesetzten Schneidwerkzeuge ihre Funktion nicht verrichten.

Aufgabe der Erfindung ist es, die Wirkung und den Aufbau derartiger Zerkleinerungswerkzeuge zu verbessern bzw. zu vereinfachen. Ferner soll die Bewegung des zu zerkleinernden Materials zu den Werkzeugen beschleunigt und ein Verlegen des Zerkleinerungswerkzeugs mit Material verhindert werden.

Erfindungsgemäß ist bei einem Zerkleinerungswerkzeug der eingangs genannten Art vorgesehen, dass im Bereich der Drehachse des Trägers ein Abweiser angeordnet ist, wobei in einem radial an den Abweiser anschließenden Bereich des Trägers steg- oder leistenförmige Förderflügel angeordnet sind und in dem an die Förderflügel radial zum Rand hin anschließenden Bereich des Trägers die Werkzeuge angeordnet sind. Dieser Abweiser bewirkt, dass sich im Bereich um die Drehachse kein Material ansammeln kann, in welchem Bereich auch die Anordnung von Werkzeugen nicht erforderlich ist. Die Werkzeuge werden von der Drehachse weg verlagert, und zwar in einen Bereich, in dem die Werkzeuge eine ausreichende Geschwindigkeit besitzen um das unzerkleinerte Material zu zerkleinern bzw. zu zerschneiden. Damit werden Einsparungen bei der Herstellung der Schneidverdichter und Zerkleinerungsanlagen erreicht. Gleichzeitig wird die Effizienz der eingesetzten Werkzeuge erhöht. Der eingesetzte Abweiser sorgt für eine Bewegung des zu zerkleinernden Materials in radialer Richtung bzw. zum Rand des Trägers hin. Dabei verhält sich das zu zerkleinernde Material wie ein Fluid und abgesehen von einer guten Vermischung des Materials innerhalb des Behälters wird das zu zerkleinernde Material rasch und effizient den Werkzeugen zugeführt, die sich in einem Bereich des Behälters bzw. des Trägers befinden, in dem sie ihre beste Wirkung entfalten.

Die erfindungsgemäß vorgesehenen Förderflügel, die sich zwischen dem Abweiser und den Werkzeugen auf dem Träger erstrecken, ermöglichen eine optimale Zufuhr des zu zerkleinernden Materials zu den Werkzeugen und tragen zu einer guten Vermischung des zerkleinerten und zu zerkleinernden Materials innerhalb des vorgesehenen Behälters bei.

Der Abweiser und die Förderflügel bringen Energie in das Kunststoffmaterial um dieses zu erwärmen und dienen gleichzeitig als Radialventilator um das zu zerkleinernde Gut radial nach außen in den Bereich der Werkzeuge zu transportieren. Des Weiteren dienen der Abweiser und die Förderflügel dazu, unzerkleinertes Material, das dem Schneidverdichter zugeführt wird, abzuweisen, sodass sich dieses Material nicht verhängt und verklemmt, sondern über den Abweiser und die Förderflügel den Werkzeugen zugeführt wird. Durch den raschen Abtransport der zu zerkleinernden Materialien vom Zentralbereich des Schneidverdichters wird die freie Oberfläche der Materialien erhöht bzw. werden diese aufgelockert, sodass eine Abdampfung von flüchtigen Stoffen erleichtert wird. Die Förderflügel erteilen dem Material eine entsprechend hohe Umlaufgeschwindigkeit und ein Austausch von Teilchen zwischen der Oberfläche der im Inneren des Schneidverdichters befindlichen Trombe und deren Innerem wird erhöht.

Der Abweiser liegt durchwegs zentral auf dem Zerkleinerungswerkzeug bzw. auf dem Träger des Zerkleinerungswerkzeugs und umgibt dessen Drehachse bzw. liegt symmetrisch zur Drehachse.

Es ist möglich, dass die Förderflügel vom Abweiser abgehen und mit diesem verbunden sind. Es ist aber nicht unbedingt erforderlich, dass die Förderflügel direkt an den Abweiser anschließen. Prinzipiell kann auch ein Spalt zwischen dem Abweiser und den Förderflügeln ausgebildet sein. Die Förderflügel liegen somit in einem Bereich, der radial weiter von der Drehachse des Zerkleinerungswerkzeugs entfernt ist als der Umfang des Abweisers. Zweckmäßigerweise gehen die Förderflügel direkt vom Umfang des Abweisers ab oder können mit diesem durch Schweißen oder Verschrauben verbunden sein.

In einem radial außerhalb des Bereichs der Förderflügel liegenden Bereich des Zerkleinerungswerkzeugs liegen die Werkzeuge. Diese Werkzeuge können direkt an die Förderflügel anschließen oder ebenfalls unter Ausbildung eines Abstands an die Förderflügel anschließen. Es ist vorteilhafterweise vorgesehen, dass die Werkzeuge zwischen dem der Drehachse fernen Ende des jeweiligen Förderflügels und dem Rand des Trägers liegen. Konstruktiv von Vorteil ist es, wenn die Werkzeuge direkt an den jeweiligen Förderflügel anschließen oder das am weiteren innen liegende Werkzeug direkt an das der Drehachse ferne Ende des jeweiligen Förderflügels anschließt. Das äußerste Werkzeug kann den Rand des Trägers überragen. Prinzipiell ist es auch möglich, nur ein einziges Werkzeug vorzusehen.

Ein einfacher und stabiler Aufbau ergibt sich, wenn der Träger von einer Scheibe gebildet ist, die auf ihrer Oberfläche den Abweiser, die Förderflügel und die Werkzeuge trägt, oder von einem zentralen Trägerteil und von einer Mehrzahl von von diesem zentralen Trägerteil abgehenden Tragbalken gebildet ist, wobei der zentrale Trägerteil den Abweiser und gegebenenfalls die Förderflügel abstützt und/oder die Tragbalken die Förderflügel und die Werkzeuge und gegebenenfalls den Abweiser abstützen. Der Träger kann von einer Scheibe oder einem scheibenähnlichen Bauteil gebildet sein.

Eine gute Ab- bzw. Umlenkung des zu zerkleinernden Materials und günstig für die Ausbildung der in einem Schneidverdichter umlaufenden Trombe ist es, wenn der Abweiser eine rotationssymmetrische, vorzugsweise kegelförmige, zylinderförmige, kegelstumpfförmige, zylinderförmige mit kegelförmigem Aufsatz, oder eine pyramidenförmige Außenkontur aufweist oder einen einen Kegel tragenden Zylinder ausbildet. Prinzipiell sind auch andere Außenformen eines Abweisers, z.B. halbkugelige Formen oder ovoide oder bombierte Formen denkbar.

Vorteile für die Materialumlenkung ergeben sich, wenn der Abweiser von seiner in der Drehachse liegenden Spitze oder von seinem die Drehachse umgebenden Bereich zum Rand des Trägers hin abfallend geneigt ist.

Ein einfacher Aufbau und eine gute Ablenkwirkung des Abweisers ergeben sich, wenn der Abweiser eine durchgehend geschlossene oder eine von einer Anzahl von die Außenkontur ausbildenden Streben und/oder Platten gebildete Oberfläche besitzt und/oder wenn die vom Abweiser in Richtung auf den Rand des Trägers abgehenden Förderflügel von der Oberfläche des Trägers abgehen oder abstehen bzw. auf dieser befestigt sind.

Bei einer besonders vorteilhaften Ausführungsform ist vorgesehen, dass der Abweiser selbst ebenfalls Förderflügel trägt, die von der Oberfläche des Abweisers abgehen bzw. abstehen und vom Träger weg gerichtet sind. Damit werden die Förderwirkung der Förderflügel, die zwischen dem Abweiser und den Werkzeugen liegen, unterstützt und die Umwälzung der Kunststoffteilchen in einem Behälter vergleichmäßigt und beschleunigt.

Die Querschnittform der Förderflügel kann vorteilhafterweise rechteckförmig sein. Die Förderflügel sind in Form von Leisten oder Stegen ausgebildet und gehen von der Oberfläche des Trägers und gegebenenfalls der Oberfläche des Abweisers ab.

Konstruktiv von Vorteil kann es sein, dass die vom Abweiser getragenen Förderflügel und die zwischen dem Abweiser und den Werkzeugen gelegenen Förderflügel unmittelbar aneinander anschließen oder miteinander einstückig ausgebildet sind.

Für den Betrieb des Zerkleinerungswerkzeugs ist es von Vorteil, wenn der Ausgangspunkt der vom Abweiser getragenen Förderflügel und somit auch der Ausgangspunkt von an diese Förderflügel anschließenden, vom Träger abgehenden Förderflügel in der Drehachse des Trägers bzw. im Mittelpunkt des Abweisers liegt oder in einem Bereich zwischen der Drehachse bzw. dem Mittelpunkt des Abweisers und dem Rand des Abweisers in einem vorgegebenen Abstand von der Drehachse liegt. Abgesehen von einem stabilen Aufbau ergibt sich eine gute Förderwirkung für das zu zerkleinernde Kunststoffmaterial.

Der Ausgangspunkt von Förderflügeln, die an den Abweiser anschließen, kann das Höhenniveau des Randes des Abweisers überragen.

Die Umwälzung des Materials und die Wirkung der Werkzeuge wird verbessert, wenn die Förderflügel im Bereich oberhalb des Abweisers in Richtung zum Rand hin einen geraden oder bezüglich einer Radialen nacheilend gekrümmten Verlauf besitzen und/oder dass die sich zwischen dem Abweiser und dem Rand des Trägers erstreckenden Förderflügel einen geraden oder bezüglich einer Radialen nacheilenden Verlauf aufweisen.

Für eine verbesserte Förderung des zu zerkleinernden Kunststoffmaterials und eine Optimierung der Energieeinbringung in das Material kann vorgesehen sein, dass vom Ausgangspunkt aus die Höhe der Förderflügel bzw. ihrer trägerfernen Fläche oder Kante bezogen auf den Träger bis auf die Höhe desjenigen Werkzeugs, das an den jeweiligen Förderflügel anschließt, insbesondere bis auf die Höhe der Schneidfläche oder der Arbeitsfläche dieses Werkzeugs, abnimmt.

Die Energieeinbringung in das Material kann variiert werden, wenn die trägerferne Kante der Förderflügel gegenüber der Oberfläche des Trägers einen geraden oder einen, vorzugsweise parabolisch, gekrümmten Verlauf besitzt oder aufeinanderfolgend gerade und/oder gekrümmte Abschnitte besitzt.

Je nach Material und Umdrehungsgeschwindigkeit des Zerkleinerungswerkzeugs kann vorgesehen sein, dass der Abweiser einen Radius von 5 bis 45 %, vorzugsweise von 15 bis 40 %, des Radius des Trägers oder des Radius des Drehkreises des radial äußersten Endbereichs der Tragbalken oder des Radius des Drehkreises des radial am weitesten außen liegenden Punkts des äußersten, gegebenenfalls den Träger nach außen zu überragenden, Werkzeugs besitzt. Damit erfolgt eine optimale Ablenkung und Zerkleinerung des Materials.

Für die Praxis hat es sich als zweckmäßig erwiesen, wenn die maximale Höhe des Abweisers und/oder eines in der Drehachse liegenden Ausgangspunkts der Förderflügel oberhalb des Trägers 10 bis 90 %, vorzugsweise 30 bis 80 %, des Radius des Trägers oder des Radius des Drehkreises des radial äußersten Endbereichs der Tragbalken oder des Radius des Drehkreises des radial am weitesten außen liegenden Punkts des äußersten Werkzeugs beträgt. Damit ergibt sich eine vorteilhafte Abstimmung der Wirkung des Abweisers mit der Wirkung der Förderflügel.

Das Schneidverhalten wird verbessert, wenn die in Drehrichtung weisenden Schneidflächen und/oder Arbeitsflächen der an die Förderflügel anschließenden Werkzeuge längs einer gekrümmten Linie angeordnet sind, die den Verlauf oder die Krümmung der Förderflügel fortsetzt und gegebenenfalls einer Radialen des Trägers nacheilt.

Die Bewegung des zu zerkleinernden Materials bzw. seine Zufuhr zu den Werkzeugen und die Energieeinbringung in das Material werden in ein günstiges Verhältnis gesetzt, wenn die Höhe der Förderflügel bezogen auf das Niveau der Schneidflächen der Werkzeuge in einem Abstand von ihrem Ausgangspunkt von 20 bis 90 %, vorzugsweise von 25 bis 80 %, des Radius des Trägers, des Radius des Drehkreises des radial äußersten Endbereichs der Balken oder des Radius des Drehkreises des radial am weitesten außen liegenden Punkts des äußersten Werkzeugs vom Drehpunkt zum Rand hin um 35 bis 70 %, vorzugsweise 40 bis 60 %, abnimmt und anschließend vorzugsweise auf das Niveau der Schneidfläche des innersten Werkzeugs abnimmt.

Für die Bewegung des Materials ist es von Vorteil, wenn die Förderflügel im rechten Winkel zur Oberfläche des Trägers stehen oder dass die Förderflügel bezüglich der Oberfläche des Trägers über zumindest einen Abschnitt ihrer Höhe in einem Winkel von bis zu 45° zum Träger in oder gegen die Bewegungsrichtung geneigt sind.

Konstruktiv ist es von Vorteil, wenn die Förderflügel an ihrer trägernahen Basiskante mit einer, gegebenenfalls auch mit dem Abweiser verbundenen, Basisfläche verbunden und gegebenenfalls mit dieser am Träger befestigt sind.

Zur Verbesserung der Schneidwirkung der Werkzeuge kann vorgesehen sein, dass die radial außen liegende Kante der Schneidfläche oder Arbeitsfläche eines jeweils innen liegenden Werkzeugs die radial innen liegende Kante der Schneidfläche oder Arbeitsfläche des jeweils radial nach außen zu anschließenden Werkzeugs in Drehrichtung gesehen abdeckt bzw. überragt.

Die vorgesehenen Werkzeuge werden von Schneidmessern, von Fräswerkzeugen oder den für die jeweilige Art des Materials bestimmten Werkzeugen gebildet. Die Werkzeuge erstrecken sich vorteilhafterweise bis zum äußersten Rand des Trägers oder ragen darüber hinaus.

Für den Einsatz und die Wirkung und Herstellung des Zerkleinerungswerkzeugs ist es von Vorteil, wenn die einzelnen Förderflügel und/oder die Werkzeuge und/oder die Tragbalken jeweils untereinander zentrisch symmetrisch und/oder untereinander gleich ausgebildet sind.

Der Bereich, in dem sich die Förderflügel erstrecken, d.h. der Bereich, der zwischen dem Bereich des Abweisers und dem Bereich der Werkzeuge liegt, wird vorteilhafterweise dadurch eingegrenzt, dass sich die an den Abweiser anschließenden Förderflügel bis zu einem Radialabstand vom Drehpunkt erstrecken, der 30 bis 70 %, vorzugsweise 40 bis 60 %, des Radius des Trägers oder des Radius des Drehkreises des radial äußersten Endbereichs der Tragbalken oder des Radius des Drehkreises des radial am weitesten außen liegenden Punkts des äußersten Werkzeugs beträgt. Es ergibt sich damit eine gute Materialumwälzung bei optimaler Schneidwirkung durch die mit relativ hoher Drehgeschwindigkeit bewegten Förderflügel, die das Material den Werkzeugen zuleiten.

Erfindungsgemäß ist vorgesehen, dass das Zerkleinerungswerkzeug im Inneren des Behälters eines Schneidverdichters angeordnet und von einer senkrecht zum Träger bzw. zu der von den Förderflügeln aufgespannten Ebene verlaufenden und vorzugsweise den Boden des Behälters durchsetzenden Drehwelle getragen ist. Damit werden der Aufbau und Wirkungsgrad eines Schneidverdichters zur Bearbeitung von, insbesondere recycelten, Kunststoffmaterialien optimiert.

Vorgesehen ist bei einem derartigen Schneidverdichter, dass die Drehachse des Trägers und die Achse der Drehwelle zusammenfallen.

Für eine verbesserte Materialbewegung kann vorgesehen sein, dass die steg- oder leistenartigen Förderflügel gegenüber dem Träger in einem Winkel von bis zu 45° in die oder gegen die Drehrichtung geneigt sind.

Für eine rasche und verstopfungsfreie Umwälzung von komplexem Material ist es zweckmäßig, wenn die Förderflügel und/oder die Förderflügel zumindest über einen Abschnitt ihres Verlaufs, insbesondere über ihren gesamten Verlauf, im Querschnitt gesehen Höhenbereiche mit unterschiedlicher Neigung zum Träger besitzen.

Eine rasche und die Trombe im Behälter rasch bewegende und durchmischende Ausführungsform der Förderflügel sieht vor, dass die Förderflügel zumindest über einen Abschnitt ihres radialen Verlaufs im Querschnitt einen sich über einen Längenbereich von 80 bis 100 %, vorzugsweise 90 %, der jeweiligen Gesamtlänge der Förderflügel erstreckenden, senkrecht zur Oberfläche des Trägers stehenden, insbesondere geraden Verlauf besitzenden, erster Längenabschnitt aufweisen, an den ein abgebogener, sich über einen Längenbereich von bis zu 20 % der jeweiligen Gesamtlänge des Förderflügels erstreckender, einen geraden oder gekrümmten Querschnitt aufweisender, gegen die Drehrichtung in einem Winkel von bis zu 45° zu einer Senkrechten zur Oberfläche des Trägers geneigter Abschnitt anschließt, dessen Scheitel in der Abbiegung liegt.

Insbesondere für spezielle Materialien ist es von Vorteil, wenn die Förderflügel zumindest über einen Abschnitt ihres radialen Verlaufs in einem Querschnitt einen sich über einen Längenbereich von bis zu 20 % der jeweiligen Gesamtlänge der Förderflügel erstreckenden, in einem Winkel von bis zu 45° gegenüber einer Senkrechten zur Oberfläche des Trägers gegen die Drehrichtung geneigten, gerade verlaufenden oder gekrümmten Querschnitt aufweisenden, ersten Längenabschnitt aufweisen, wenn an diesen Längenabschnitt ein sich senkrecht zur Überfläche des Trägers erstreckender Mittelabschnitt über einen Längenbereich von 60 bis 80 % der jeweiligen Gesamtlänge der Förderflügel anschließt, und wenn an diesen Mittelabschnitt ein abgebogener, im Querschnitt gerader oder gekrümmter Endabschnitt über einen Längenbereich von bis zu 20 % der jeweiligen Gesamtlänge der Förderflügel anschließt, der in die oder gegen die Drehrichtung unter einem Winkel von bis zu 45° zu einer Senkrechten zur Oberfläche des Trägers geneigt ist und einen geraden oder gekrümmten Querschnitt aufweist, wobei der Scheitel des Winkels in der Abbiegung liegt.

Für die Materialbearbeitung und Zerkleinerung ist es wichtig, die Krümmung bzw. den Verlauf der Vorderfront der Förderflügel und der Werkzeuge festzulegen. Es ist dabei von Vorteil, wenn die Förderflügel ausgehend von ihrem Ausgangspunkt und die anschließenden Werkzeuge einen insbesondere durchwegs gekrümmten Verlauf ihrer in Drehrichtung weisenden Vorderkanten und/oder -flächen besitzen, wobei die Krümmung durch einen Kreisbogen mit einer Genauigkeit von 10 % des Kreisbogenradius angenähert ist und der Kreisbogenradius 50 bis 80%, vorzugsweise 52 bis 75 %, des Radius des Trägers oder des Radius des Drehkreises des radial äußersten Endbereichs der Tragbalken oder des Drehkreises des radial am weitesten außen liegenden Punkts des äußersten Werkzeugs beträgt. Eine Festlegung des Verlaufs kann auch erfolgen, wenn die Krümmung der von ihrem Ausgangspunkt ausgehenden Förderflügel durch ihren Winkelabstand zu einer voreilenden Radialen angenähert ist, wobei ausgehend von der Drehachse in einem Abstandsbereich von 5 bis 45 % des Radius des Trägers oder des Radius des Drehkreises des radial äußersten Endbereichs der Tragbalken oder des Drehkreises des radial am weitesten außen liegenden Punkts des äußersten Werkzeugs der Winkelabstand 0 bis 25°, in einem Abstandsbereich von 15 bis 90 % der Winkelabstand 15 bis 40°, in einem Abstandsbereich von 35 bis 95 % der Winkelabstand 30 bis 55°, und in einem Abstandsbereich von über 65 % bzw. von 65 bis 100 % der Winkelabstand 45 bis 80°, vorzugsweise 45 bis 60°, beträgt.

Zweckmäßig für die Gestaltung der Förderflügel kann es auch sein, wenn die Förderflügel radial von der Drehachse ausgehen und bis zum Rand des Abweisers dem Verlauf einer Geraden folgen, die eine Tangente an die Krümmung bzw. den Verlauf bzw. an die Vorderfront der anschließenden Förderflügel darstellt.
Fig. 1 zeigt einen schematischen Schnitt durch einen Behälter, in dem ein erfindungsgemäßes Zerkleinerungswerkzeug angeordnet ist.
Fig. 2 zeigt eine Draufsicht auf eine Ausführungsform eines Zerkleinerungswerkzeugs, so wie es in einem Behälter gemäß Fig. 1 eingesetzt werden kann.
Fig. 3 zeigt eine alternative Ausführungsform eines Zerkleinerungswerkzeugs.
Fig. 4, 5, 5, 6, 7, 8 zeigen unterschiedliche Ausführungsformen von Zerkleinerungswerkzeugen.
Fig. 9 zeigt einen Schnitt durch einen Förderflügel.
Fig. 10 zeigt eine alternative Ausführungsform eines Abweisers, der keine Förderflügel trägt.
Fig. 11a, 11b, 11c und 11d zeigen verschiedene Querschnittsformen von Förderflügeln.

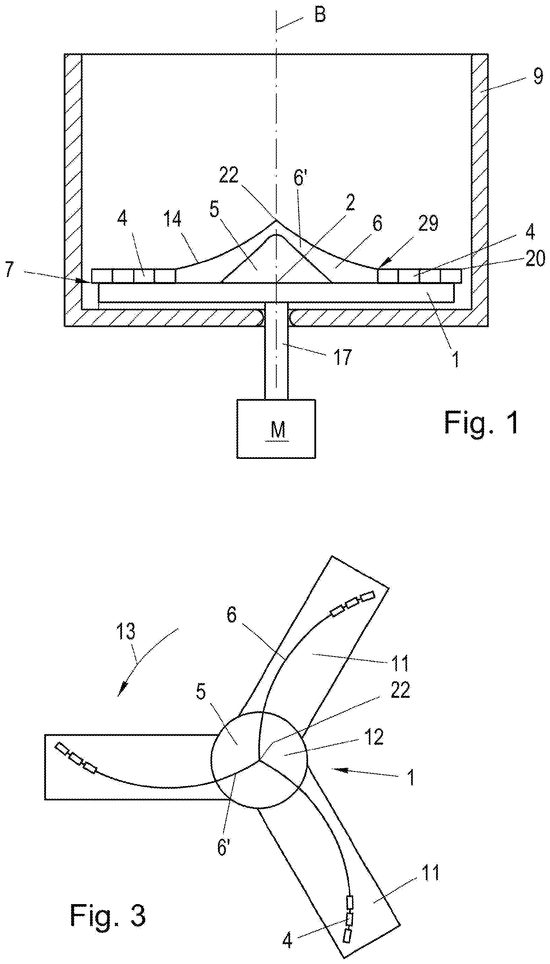

Fig. 1 zeigt einen Behälter 9, in dem ein erfindungsgemäßes Zerkleinerungswerkzeug um seine vertikal eingerichtete Drehachse B über eine Welle 17 von einem Motor M zu einer Rotationsbewegung antreibbar gelagert ist. In seinem mittleren Bereich trägt der scheibenförmige Träger 1 einen Abweiser 5, der vorteilhafterweise rotationssymmetrisch zur Drehachse B des Trägers 1 ausgebildet ist. Vom Abweiser 5 aus erstrecken sich in Richtung zum Rand 7 des Trägers 1 Förderflügel 6, an deren Endbereich 29 Werkzeuge 4 anschließen. Im vorliegenden Fall trägt auch der Abweiser 5 Förderflügel 6' bzw. sind Förderflügel 6' oberhalb des Abweisers 5 angeordnet. Diese Förderflügel 6' sind im vorliegenden Fall mit den Förderflügeln 6 einstückig ausgebildet.

Die oberhalb des Abweisers 5 angeordneten Förderflügel 6' und an diese anschließende Förderflügel 6 können von einem gemeinsamen Ausgangspunkt 22, der vorteilhafterweise in der Drehachse B gelegen ist, ausgehen und fallen in Richtung zum Rand 7 des Trägers 1 ab. Die Höhe der oberen Kante 14 der Förderflügel 6 und 6', die dem Träger 1 fern liegt, nimmt von ihrem radial innen liegenden Ausgangspunkt 22 bis auf das Niveau der Werkzeuge 4 bzw. deren Schneidflächen 8 ab. Die Kante 14 kann einen geraden oder einen gekrümmten Verlauf besitzen. Es kann auch ein parabolischer Verlauf vorgesehen sein, oder dass die Kante 14 gerade oder gekrümmte Abschnitte, die in beliebiger Weise aufeinanderfolgen, aufweist.

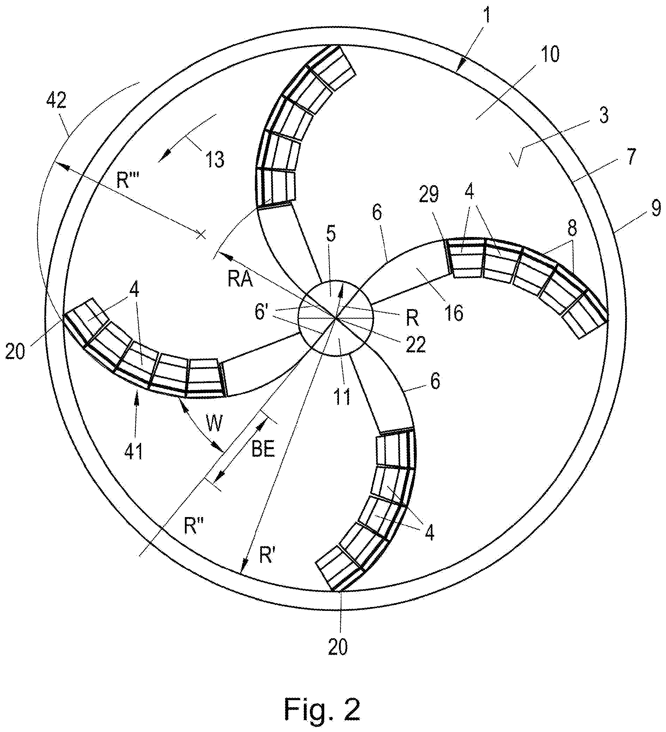

Der Träger 1 kann von einer Scheibe 10 gebildet sein, so wie diese in Fig. 1 und 2 dargestellt ist. Es ist jedoch auch möglich, den Träger 1 derart auszubilden, dass er einen zentralen Trägerteil 12 besitzt, von dem Tragbalken 11 abgehen, so wie dies in Fig. 3 dargestellt ist.

Die Anzahl der Tragbalken 11 und Werkzeuge 4 ist ebenso wählbar wie die Anzahl der auf dem Träger 1 angeordneten Förderflügel 6, 6'. Zumindest werden zumindest zwei Förderflügel 6 mit daran anschließenden Werkzeugen 4 vorgesehen.

Das Zerkleinerungswerkzeug ist - wie Fig. 3 zeigt - vorteilhafterweise zentrisch symmetrisch ausgebildet.

Der Abweiser 5 ist im Fall der Fig. 1 und 3 kegelförmig ausgebildet und, ausgehend von seinen mittigen, in der Drehachse B liegenden Bereich bzw. seiner Spitze 21, zum Rand 7 des Trägers 1 hin abfallend geneigt.

Der Abweiser 5 kann eine durchgehend geschlossene Oberfläche besitzen oder von einer Anzahl von Streben und/oder Platten gebildet sein, welche eine vorteilhafterweise rotationssymmetrische, beispielsweise kegelförmige, Struktur ergeben.

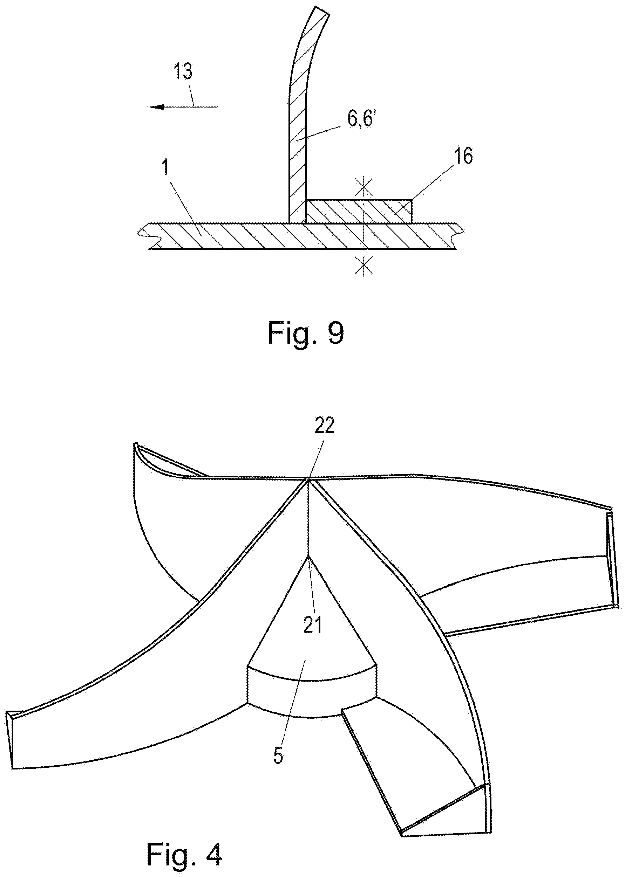

Wie insbesondere aus Fig. 1 und 2 ersichtlich, gehen die Förderflügel 6' von einem gemeinsamen Ausgangspunkt 22 aus, der in der Drehachse B des Trägers 1 im Abstand oberhalb des Abweisers 5 liegt. Dies ist auch aus Fig. 4. ersichtlich, die eine perspektivische Ansicht des Abweisers 5 gemäß Fig. 1 zeigt. Gemäß Fig. 2 und 4 gehen von diesem Ausgangspunkt 22 vier Förderflügel 6' ab, die oberhalb des Abweisers 5 verlaufen. Die Förderflügel 6 schließen an die Förderflügel 6' an und erstrecken sich vom Abweiser 5 in Richtung zum Rand 7 des Trägers 1 hin. Die Förderflügel 6' verlaufen radial gerade; die an die Förderflügel 6' anschließenden, vom Träger 1 abgestützten Förderflügel 6 sind bezüglich einer Radialen R" des Zerkleinerungswerkzeugs nacheilend gekrümmt.

Ganz allgemein hat es sich für alle Ausführungsformen der Erfindung als vorteilhaft erwiesen, wenn sich die Förderflügel 6 vom Rand des Abweisers 5 bis zu einem radialen Abstand RA von der Drehachse B des Trägers 1 erstrecken, welcher Abstand RA 30 % bis 70 %, vorzugsweise 40 % bis 60 %, des Radius des Trägers 1 oder des Drehkreises des äußersten Punkts des äußersten Werkzeugs 4 oder des Endes der Tragbalken 11 beträgt.

Ganz allgemein ist für alle Ausführungsformen der Erfindung vorgesehen, dass der Abweiser 5 einen Radius R von 5 bis 45 %, vorzugsweise von 15 bis 40 %, des Radius R' des Trägers 1 oder des Radius des Drehkreises des radial äußersten Endbereichs der Tragbalken 11 oder des Radius des Drehkreises des radial am weitesten außen liegenden Punkts 20 des äußersten Werkzeugs 4 besitzt.

Die Größe des Radius R des Abweisers 5 bzw. die Größe des Abstands RA bzw. der Höhenverlauf der Förderflügel 6, 6' werden von der Art des zu verarbeitenden Kunststoffmaterials und der gewünschten Zerkleinerung und der gewünschten Menge an einzutragender Wärmeenergie bestimmt.

Des Weiteren kann ganz allgemein bei allen Ausführungsformen vorgesehen sein, dass die maximale Höhe des Abweisers 5 und/oder eines in der Drehachse B liegenden Ausgangspunkts 22 der Förderflügel 6' oberhalb des Trägers 10 bis 90 %, vorzugsweise 30 bis 80 %, des Radius des Trägers 1 oder des Radius des Drehkreises des radial äußersten Endbereichs der Tragbalken 11 oder des Drehkreises des radial am weitesten außen liegenden Punkts 20 des äußersten Werkzeugs 4 beträgt. Auch dieser Parameter kann, insbesondere in Abhängigkeit des zu verarbeitenden Materials, gewählt werden.

Die Förderflügel 6' und 6 nehmen von ihrem Ausgangspunkt 22 zum Rand 7 hin bzgl. ihrer Höhe ab und enden auf dem Niveau der Werkzeuge 4 bzw. auf dem Niveau der Schneidflächen 8 dieser Werkzeuge 4. Dabei ist es zweckmäßig, wenn die Höhe der Förderflügel 6, 6' bezogen auf das Niveau der Schneidfläche 8 der Werkzeuge 4 in einem Abstand von ihrem Ausgangspunkt 22 von 20 bis 90 %, vorzugsweise von 25 bis 80 %, des Radius des Trägers 1, des Radius des Drehkreises des radial äußersten Endbereichs der Balken 11 oder des Drehkreises des radial am weitesten außen liegenden Punkts 20 des äußersten Werkzeugs 4 von der Drehachse B zum Rand hin um 35 bis 70 %, vorzugsweise 40 bis 60 %, abnimmt und anschließend auf das Niveau der Schneidflächen 8 der Werkzeuge 4 abnimmt. Durch Einstellung dieses Parameters kann die Förderwirkung bzw. Umwälzwirkung der Förderflügel 6, 6' an das zu zerkleinernde bzw. zu bearbeitende Kunststoffmaterial angepasst und eingestellt werden.

An die Förderflügel 6 schließen ein oder eine Anzahl von aufeinanderfolgend angeordneten Werkzeugen 4 an, die Schneidflächen 8 und die erforderlichen Arbeitsflächen tragen. Diese Werkzeuge bzw. deren Schneidflächen 8 folgen im Wesentlichen der Krümmung der Förderflügel 6 und zeigen einen bzgl. einer Radialen R" nacheilend gekrümmten Verlauf.

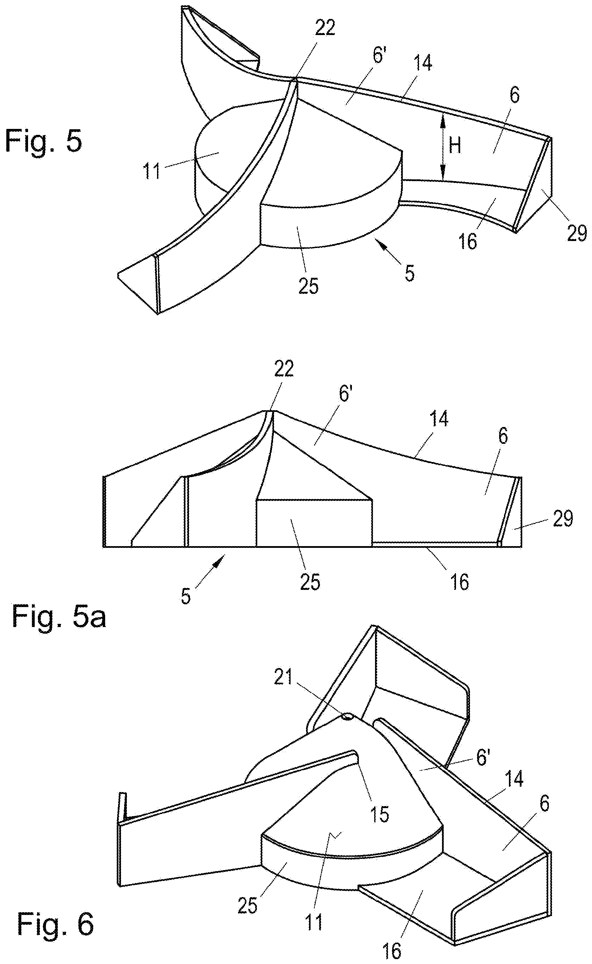

Fig. 5 und 5a zeigen eine Ausführungsform eines Zerkleinerungswerkzeugs, bei der die Förderflügel 6 und 6' einstückig ausgebildet sind und von ihrem Ausgangspunkt 22 einen bzgl. der Radialen R" nacheilend gekrümmten Verlauf bis zu ihrem rand- bzw. werkzeugnahen Ende 29 besitzen. Der Abweiser 5 besitzt eine zylindrische Basis 25, auf der ein Drehkegel 11 aufgesetzt ist. Die Förderflügel 6 und 6' stehen senkrecht zum Träger 1.

Eine Basisfläche 16 der Förderflügel 6 kann zur Verbindung der Förderflügel 6 und/oder des Abweisers 5 mit dem Träger 1 dienen. Fig. 5a zeigt eine Seitenansicht durch das Zerkleinerungswerkzeug gemäß Fig. 5 und man erkennt die gekrümmt abfallende, obere bzw. trägerferne Kante 14 der einstückig ausgebildeten Förderflügel 6 und 6'.

Fig. 6 zeigt eine Ausführungsform, bei der die Förderflügel 6 und 6' einstückig gerade aufeinanderfolgend in Form einer Platte ausgebildet sind. Diese Förderflügel 6, 6' beginnen im Abstand von der Spitze 21 des Abweisers 5, und zwar von einem Bereich 15 der Mantelfläche des Kegels 11, der mit der zylindrischen Basis 25 eine Einheit bildet.

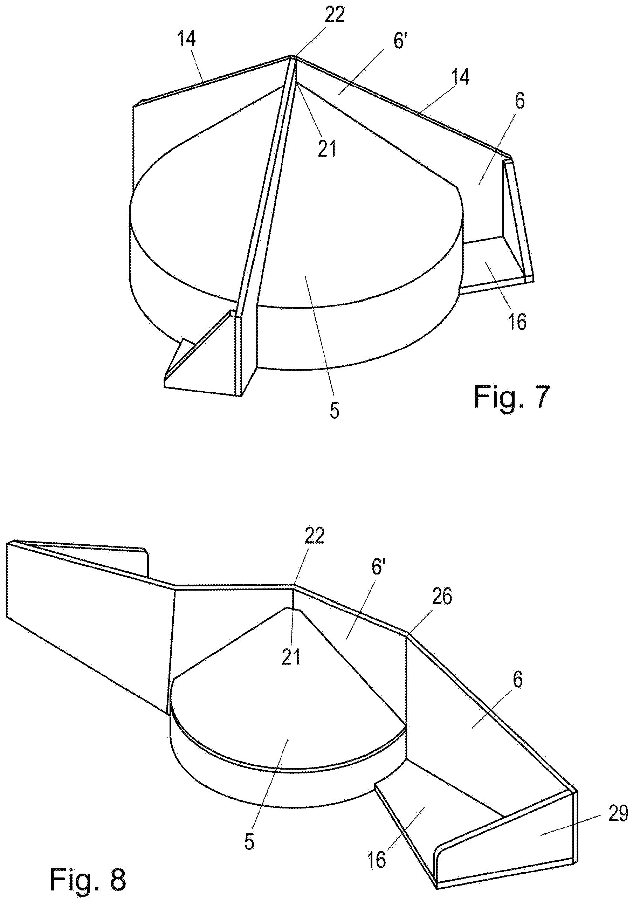

Fig. 7 zeigt eine Ausführungsform, bei der drei einstückige Förderflügel 6 und 6' vorgesehen sind, die von einem oberhalb der Spitze 21 des Kegels 5 liegenden Ausgangspunkt 22 radial und gerade in Form einer Platte zum Rand 7 des Trägers 1 hin gerichtet verlaufen, wobei der Verlauf der oberen Kante 14 der Förderflügel 6, 6' einer Geraden folgt. Auch diese Förderflügel 6, 6' stehen senkrecht oder annähernd senkrecht zum Träger 1 wie die in den vorangehenden Figuren dargestellten Förderflügel.

Fig. 8 zeigt eine Ausführungsform eines Zerkleinerungswerkzeugs mit lediglich zwei Paaren von Förderflügeln 6, 6'. Die Förderflügel 6' verlaufen von ihrem Ausgangspunkt 22 oberhalb der Spitze 21 des Kegels 5 bis zum Rand des Abweisers 5 und gehen unter Ausbildung eines Knicks 26 in die Förderflügel 6 über. Der Knick 26 liegt bezüglich des Ausgangspunkts 22 und des Endpunkts 29 der Förderflügel 6 und 6' bezüglich der Radialen R" nacheilend.

Fig. 9 zeigt einen Schnitt senkrecht zum Verlauf eines steg- bzw. leistenförmigen Förderflügels 6 oder 6'. Die am Träger 1 mit ihrer Basis 16 befestigten Förderflügel 6, 6' sind in ihrem trägerfernen Endbereich zumindest über einen radial verlaufenden Abschnitt gekrümmt. Je nach Art des zu zerkleinernden Materials kann vorgesehen sein, dass der Endbereich der Förderflügel 6 und/oder 6' in Richtung der Drehrichtung 13 oder gegen diese abgebogen bzw. gekrümmt ist.

Der erfindungsgemäß vorgesehene Abweiser 5 ist am Träger 1 befestigt, z.B. angeschraubt, und ist auch vorgesehen, um die Verschraubung zwischen dem Träger 1 und der Drehwelle 17 gegenüber dem zu bearbeitenden Kunststoffmaterial abzudecken und zu verhindern, dass Staub und Feuchte zur Verbindungsstelle vordringt.

Es ist möglich, an Stelle einer Anzahl von aufeinander folgend angeordneten Werkzeugen 4 auch ein einziges, einstückiges Werkzeug vorzusehen, das an die Förderflügel 6 anschließt und sich bis zum Rand 7 des Trägers 1 erstreckt.

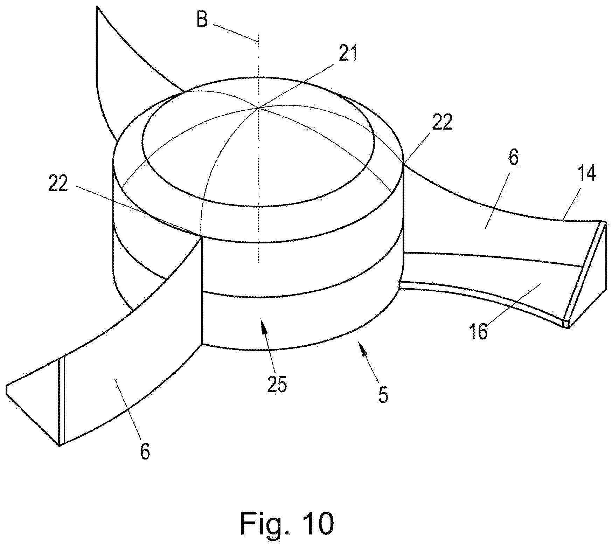

Fig. 10 zeigt einen Abweiser 5, der keine Förderflügel 6' trägt. Vom zylindrischen Teil 25 des Abweisers 5 gehen die Förderflügel 6 zum Rand 7 des Trägers 1 gerichtet ab. Von ihrem Ausgangspunkt 22 fällt die Kante 14 der Förderflügel 6 zum Rand 7 des Trägers 1 ab auf das Niveau der Werkzeuge 4 bzw. auf das Niveau der Schneidflächen 8. Der Ausgangspunkt 22 kann die Seitenwand des Zylinders 25 überragen, der auf seiner Oberseite bombiert ist.

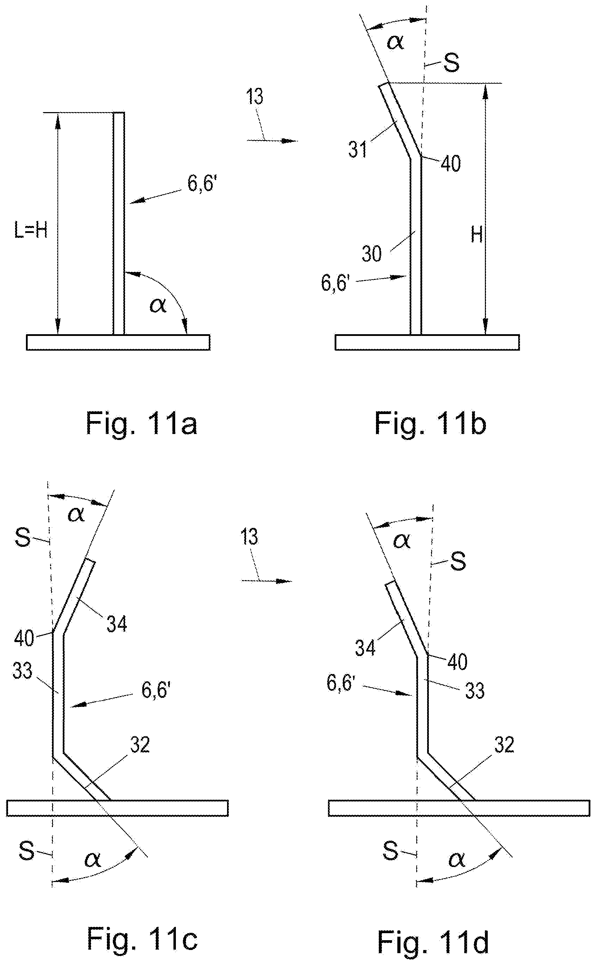

Fig. 11 zeigt verschiedene Querschnittsformen der Förderflügel 6, 6' über ihren Verlauf von ihrer Ausgangsstelle 22 in Richtung zum Rand 7 des Trägers 1.

In Fig. 11a ist der Querschnitt eines Förderflügels 6, 6' dargestellt, der in einem Winkel α von etwa 90°, d.h. etwa senkrecht vom Träger 1 absteht. Dieser Winkel α kann um einige Grad variieren. Ein derartiger Förderflügel 6, 6' fördert das Material vor allem in radialer Richtung zum Rand 7 des Trägers 1 hin. Prinzipiell ist es möglich, dass sich dieser Förderflügel 6, 6' in einem Winkel α von 45° bis 135° erstreckt, d.h. um 45° zur als auch um 45° gegen die Bewegungsrichtung 13 geneigt ist. Die Länge L des Förderflügels entspricht in diesem Fall seiner Höhe H. In den Fig. 11b, 11c und 11d sind abgebogene Abschnitte vorhanden und es wird dabei auf die Gesamtlänge L des Förderflügels Bezug genommen.

In Fig. 11b ist ein Förderflügel 6, 6' dargestellt, der über seine Höhe H bzw. seine gesamte Länge L gesehen Abschnitte mit unterschiedlicher Neigung besitzt. Der dargestellte Förderflügel 6, 6' besitzt einen zum Träger 1 senkrecht verlaufenden, trägernahen ersten Längenabschnitt 30, der sich über einen Anteil von etwa 80 bis 100%, vorzugsweise 90 %, der Gesamtlänge L des Förderflügels 6, 6' erstreckt. Im trägerfernen Bereich schließt an diesen ersten Längenabschnitt 30 ein gegen die Drehrichtung 13 gerichteter, insbesondere abgebogener, Abschnitt 31 an, der sich über einen Längenbereich von bis zu 20 % der jeweiligen Länge L des Förderflügels 6, 6' erstreckt. Ein derartiger Förderflügel 6, 6' fördert sowohl radial zum Träger 1 als auch in eine vom Träger 1 weg weisende Richtung. Dieser Abschnitt 31 schließt mit dem Längenabschnitt 30 bzw. der Senkrechten S zur Oberfläche des Trägers 1 einen spitzen Winkel α von bis zu 45° ein, dessen Scheitel in der Abbiegung der Kante bzw. Abbiegung 40 liegt.

Fig. 11c zeigt einen Querschnitt durch einen Förderflügel 6, 6', bei dem sich ein erster Längenabschnitt 32 über einen Längenbereich von bis zu 20 % der jeweiligen Länge L des Förderflügels 6, 6' erstreckt und gegen die Drehrichtung 13 geneigt ist und einen spitzen Winkel α von bis zu 45° mit der Senkrechten S einschließt. An diesen unteren bzw. innen liegenden Längenabschnitt 32 schließt ein senkrecht zur Oberfläche des Trägers 1 verlaufender Mittelabschnitt 33 an, der eine Länge von etwa 60 bis 80 % der jeweiligen Länge L der Förderflügel 6, 6' besitzt. An diesen Mittelabschnitt 33 schließt ein Endabschnitt 34 an, der bis zu 20 % der Länge L des jeweiligen Förderflügels 6, 6' besitzt, in Drehrichtung 13 geneigt ist und mit der Senkrechten S zum Träger 1 einen spitzen Winkel α von bis zu 45° einschließt. Ein derartiger Förderflügel 6, 6' fördert in seinem unteren Bereich vom Träger 1 weg und in seinem trägerfernen Endabschnitt 34 zum Träger 1 hin. Der Längenabschnitt 32 sowie der Mittelabschnitt 33 und der Endabschnitt 34 fördern jedoch auch in radialer Richtung.

Fig. 11d zeigt einen Förderflügel 6, 6' so wie er in Fig. 11c dargestellt ist, mit der Abänderung, dass der Endabschnitt 34 nicht in Drehrichtung 13 geneigt ist, sondern gegen die Drehrichtung 13 geneigt verläuft. Der Endabschnitt 34 schließt mit der Senkrechten S zum Träger 1 einen Winkel α von bis zu 45° ein.

Die tatsächliche Höhe H der Förderflügel 6, 6' hängt in Fig. 11b von der tatsächlichen Gesamtlänge L und dem Winkel α ab, mit dem der Längenabschnitt 32 und der Endabschnitt 34 geneigt sind.

Die Gesamtlänge L berechnet sich aus der Länge der einzelnen Abschnitte 30 und 31 bzw. der Abschnitte 32, 33 und 34 in Fig. 11c und 11d.

Sämtliche Abschnitte 30, 31, 32, 33 und 34 der Förderflügel 6, 6' können geraden oder gekrümmten Verlauf zeigen. Die einzelnen Abschnitte sind durch Abbiegen eines leistenförmigen Grundförderflügels erstellt worden. Es kann sich somit an einen jeweils geraden Abschnitt durch eine Abbiegung ein gekrümmter Abschnitt anschließen und an einen gekrümmten Abschnitt durch eine Abbiegung ein gerader Abschnitt anschließen.

Fig. 2 zeigt den Radius R'" eines Kreisbogens 42, mit dem die Vorderfront 41 der Förderflügel 6, 6' und der Schneidflächen 8 der Werkzeuge 4 angenähert werden kann. Der Kreisbogen 42 verläuft durch den Ausgangspunkt 22 des jeweiligen Förderflügels 6, 6' und den am äußersten liegenden Punkt 20 des am weitesten außen liegenden Werkzeugs 4. Dies bedeutet nicht, dass die Vorderfront 41 der Förderflügel 6, 6' und der Werkzeuge 4 exakt einem Kreisbogen folgen müssen; es ist durchaus möglich, dass dieser Verlauf von einem Kreisbogen abweicht. Es ist jedoch möglich, den Verlauf der Vorderfront 41 durch speziell gewählte Kreisbögen anzunähern, mit einer Genauigkeit bzw. einem Maximalabstand der einzelnen Punkte der Vorderfront 41 von dem Kreisbogen 42 die 10 % des Radius R'" des Kreisbogens 42 beträgt. Erfindungsgemäß ist somit vorgesehen, dass die Förderflügel ausgehend von ihrem Ausgangspunkt und die anschließenden Werkzeuge einen vorzugsweise durchwegs gekrümmten Verlauf ihrer in Drehrichtung weisenden Vorderkanten und/oder -flächen besitzen, wobei die Krümmung durch einen Kreisbogen 42 mit einer Genauigkeit von 10 % des Kreisbogenradius angenähert ist und der Kreisbogenradius 50 bis 80%, vorzugsweise 52 bis 75 %, des Radius des Trägers oder des Radius des Drehkreises des radial äußersten Endbereichs der Tragbalken oder des Drehkreises des radial am weitesten außen liegenden Punkts des äußersten Werkzeugs beträgt. Die Schneidflächen 8 der einzelnen Werkzeuge 4 können auch gerade verlaufen.

Eine andere Möglichkeit zur Bestimmung und Festlegung einer optimalen Krümmung der Förderflügel 6, 6' und der Vorderfront der Werkzeuge 4 ist dann gegeben, wenn die Krümmung der von ihrem Ausgangspunkt ausgehenden Förderflügel durch ihren Winkelabstand W zu einer voreilenden Radialen R" angenähert ist, wobei ausgehend von der Drehachse in einem Abstandsbereich BE von 5 bis 45 % des Radius des Trägers oder des Radius des Drehkreises des radial äußersten Endbereichs der Tragbalken oder des Drehkreises des radial am weitesten außen liegenden Punkts des äußersten Werkzeugs der Winkelabstand W 0 bis 25°, in einem Abstandsbereich BE von 15 bis 90 % der Winkelabstand W 15 bis 40°, in einem Abstandsbereich BE von 35 bis 95 % der Winkelabstand W 30 bis 55°, und in einem Abstandsbereich BE von 65 bis 100 % der Winkelabstand W 45 bis 80°, vorzugsweise 45 bis 60°, beträgt.

In Fig. 2 sind ein Abstandsbereich BE und ein möglicher Winkelabstand W angegeben, der für diesen Abstandsbereich BE möglicherweise vorgegeben sein kann. Die Werte aus den einzelnen Abstandsbereichen bzw. für die einzelnen Winkelabstände in diesen Abstandsbereichen werden je nach Materialart und der gewünschten Bearbeitung gewählt.

Prinzipiell kann die Einstellung der vorgegebenen Parameter durch Anordnung unterschiedlich gestalteter Förderflügel 6, 6' und Befestigung anderer Werkzeuge 4 in vorgegebener Lage am Träger 1 erreicht werden.

Die Förderflügel 6 können an die Förderflügel 6' gerade oder unter Ausbildung eines Knicks anschließen.

## Patentansprüche

1. Zerkleinerungswerkzeug für Kunststoffmaterialien, wobei das Zerkleinerungswerkzeug zu einer Rotationsbewegung antreibbar ist, umfassend einen Träger (1), der um eine auf ihm zentral gelegene Drehachse (B) rotierbar ist und auf dessen Oberfläche (3) Werkzeuge (4) zur Bearbeitung und Zerkleinerung der Kunststoffmaterialien angeordnet sind, wobei im Bereich der Drehachse (B) des Trägers (1) ein Abweiser (5) angeordnet ist, wobei in einem radial an den Abweiser (5) anschließenden Bereich des Trägers (1) steg- oder leistenförmige Förderflügel (6) angeordnet sind und die Werkzeuge (4) in dem an die Förderflügel (6) radial zum Rand (7) des Trägers (1) hin anschließenden Bereich angeordnet sind.

2. Zerkleinerungswerkzeug nach Anspruch 1, **dadurch gekennzeichnet, dass** die Förderflügel (6) vom Abweiser (5) abgehen oder mit diesem verbunden sind.

3. Zerkleinerungswerkzeug nach Anspruch 1 oder 2, **dadurch gekennzeichnet, dass** die Werkzeuge (4) zwischen dem der Drehachse (B) fernen Ende des jeweiligen Förderflügels (6) und dem Rand (7) des Trägers (1) liegen und/oder dass die Werkzeuge (4) direkt an den jeweiligen Förderflügel (6) anschließen oder das am weiteren innen liegende Werkzeug direkt an das der Drehachse (B) ferne Ende des jeweiligen Förderflügels (6) anschließt.

4. Zerkleinerungswerkzeug nach einem der Ansprüche 1 bis 3, **dadurch gekennzeichnet, dass** der Träger (1) von einer Scheibe (10) gebildet ist, die auf einer Oberfläche den Abweiser (5), die Förderflügel (6) und die Werkzeuge (4) trägt, oder von einem zentralen Trägerteil (12) und von einer Mehrzahl von von diesem zentralen Trägerteil (12) abgehenden Tragbalken (11) gebildet ist, wobei der zentrale Trägerteil (12) den Abweiser (5) und gegebenenfalls die Förderflügel (6) abstützt und/oder die Tragbalken (12), die Förderflügel (6) und die Werkzeuge (4) und gegebenenfalls den Abweiser (5) abstützen.

5. Zerkleinerungswerkzeug nach einem der Ansprüche 1 bis 4, **dadurch gekennzeichnet, dass** der Abweiser (5) eine rotationssymmetrische, vorzugsweise kegelförmige, zylinderförmige, kegelstumpfförmige, zylinderförmige mit kegelförmigem Aufsatz, oder eine pyramidenförmige Außenkontur aufweist oder einen einen Kegel tragenden Zylinder ausbildet und/oder dass die Symmetrieachse des Abweisers (5) in der Drehachse (B) liegt und/oder dass der Abweiser (5) von seiner in der Drehachse (B) liegenden Spitze oder von seinem die Drehachse (B) umgebenden, der Oberfläche des Trägers (1) fernen Bereich zum Rand (7) des Trägers (1) hin abfallend geneigt ist und/oder dass der Abweiser (5) eine durchgehend geschlossene oder eine von einer Anzahl von die Außenkontur ausbildenden Streben und/oder Platten gebildete Oberfläche besitzt und/oder dass die vom Abweiser (5) in Richtung auf den Rand (7) des Trägers (1) abgehenden Förderflügel (6) von der Oberfläche (3) des Trägers (1) abgehen oder abstehen.

6. Zerkleinerungswerkzeug nach einem der Ansprüche 1 bis 5, **dadurch gekennzeichnet, dass** der Abweiser (5) selbst Förderflügel (6') trägt, die von der Oberfläche (11) des Abweisers (5) abgehen und vom Träger (1) weg gerichtet sind und/oder dass die vom Abweiser (5) getragenen Förderflügel (6') und die zwischen dem Abweiser (5) und den Werkzeugen gelegenen Förderflügel (6) unmittelbar aneinander anschließen oder miteinander einstückig ausgebildet sind und/oder dass der Ausgangspunkt (22) der vom Abweiser (5) getragenen Förderflügel (6') und der an diese Förderflügel (6') anschleißenden Förderflügel (6) in der Drehachse (B) des Trägers (1) bzw. im Mittelpunkt (21) des Abweisers (5) liegt oder in einem Bereich zwischen der Drehachse (B) bzw. dem Mittelpunkt (21) des Abweisers (5) und dem Rand des Abweisers (5) in einem vorgegebenen Abstand von der Drehachse (B) liegt.

7. Zerkleinerungswerkzeug nach einem der Ansprüche 1 bis 6, **dadurch gekennzeichnet, dass** die Förderflügel (6') im Bereich oberhalb des Abweisers (5) in Richtung zum Rand (7) hin einen geraden oder von ihrem Ausgangspunkt (22) aus bezüglich einer Radialen (R") einen nacheilend gekrümmten Verlauf besitzen und/oder dass die sich zwischen dem Abweiser (5) und dem Rand (7) des Trägers (1) erstreckenden Förderflügel (6) einen geraden oder bezüglich einer Radialen (R") nacheilenden Verlauf aufweisen.

8. Zerkleinerungswerkzeug nach einem der Ansprüche 1 bis 7, **dadurch gekennzeichnet, dass** die Höhe der Förderflügel (6, 6') bzw. ihrer trägerfernen Fläche oder Kante (14) oberhalb des Trägers (1) von ihrem Ausgangspunkt (22) bis auf die Höhe desjenigen Werkzeugs (4), das an den jeweiligen Förderflügel (6) anschließt, insbesondere bis auf die Höhe der Schneidfläche (8) oder der Arbeitsfläche dieses Werkzeugs (4), abnimmt und/oder dass die trägerferne Kante (14) der Förderflügel (6, 6') gegenüber der Oberfläche (3) des Trägers (1) einen geraden oder einen, vorzugsweise parabolisch, gekrümmten Verlauf besitzt oder aufeinanderfolgend gerade und/oder gekrümmte Abschnitte besitzt.

9. Zerkleinerungswerkzeug nach einem der Ansprüche 1 bis 8, **dadurch gekennzeichnet, dass** der Abweiser (5) einen Radius (R) von 5 bis 45 %, vorzugsweise von 15 bis 40 %, des Radius (R') des Trägers (1) oder des Radius des Drehkreises des radial äußersten Endbereichs der Tragbalken (11) oder des Drehkreises des radial am weitesten außen liegenden Punkts (20) des äußersten Werkzeugs (4) besitzt und/oder dass die maximale Höhe des Abweisers (5) und/oder eines in der Drehachse (B) liegenden Ausgangspunkts (22) der Förderflügel (6') oberhalb des Trägers (1) 10 bis 90 %, vorzugsweise 30 bis 80 %, des Radius (R') des Trägers (1) oder des Radius des Drehkreises des radial äußersten Endbereichs der Tragbalken (11) oder des Drehkreises des radial am weitesten außen liegenden Punkts (20) des äußersten Werkzeugs (4) beträgt und/oder dass die in Drehrichtung (13) weisenden Schneidflächen (8) und/oder Arbeitsflächen der an die Förderflügel (6) anschließenden Werkzeuge (4) längs einer gekrümmten Linie angeordnet sind, die den Verlauf oder die Krümmung der Förderflügel (6) fortsetzt und gegebenenfalls einer Radialen (R") des Trägers (1) nacheilt.

10. Zerkleinerungswerkzeug nach einem der Ansprüche 1 bis 9, **dadurch gekennzeichnet, dass** die Höhe (H) der Förderflügel (6, 6') bezogen auf das Niveau der Schneidfläche (8) der Werkzeuge in einem Abstand von ihrem Ausgangspunkt (22) von 20 bis 90 %, vorzugsweise von 25 bis 80 %, des Radius (R') des Trägers (1), des Radius des Drehkreises des radial äußersten Endbereichs der Balken (11) oder des Drehkreises des radial am weitesten außen liegenden Punkts (20) des äußersten Werkzeugs (8) von der Drehachse (B) zum Rand (7) hin um 35 bis 70 %, vorzugsweise 40 bis 60 %, abnimmt und anschließend auf das Niveau der Schneidfläche (8) der Werkzeuge (4) abnimmt und/oder dass die Förderflügel (6, 6') im rechten Winkel zur Oberfläche (3) des Trägers (1) stehen oder dass die Förderflügel (6) bezüglich der Oberfläche (3) des Trägers (1) über zumindest einen Abschnitt ihrer Höhe in einem Winkel von bis zu 45° geneigt sind und/oder dass die Förderflügel (6) an ihrer trägernahen Basiskante mit einer, gegebenenfalls auch mit dem Abweiser (5) verbundenen, Basisfläche (16) verbunden und gegebenenfalls mit dieser am Träger (1) befestigt sind und/oder dass die radial außen liegende Kante der Schneidfläche (8) oder Arbeitsfläche eines jeweils innen liegenden Werkzeugs (4) die radial innen liegende Kante der Schneidfläche (8) oder Arbeitsfläche des jeweils radial nach außen zu anschließenden Werkzeugs (4) in Drehrichtung (13) gesehen abdeckt bzw. überragt und/oder dass die einzelnen Förderflügel (6, 6') und/oder die Werkzeuge (4) und/oder die Tragbalken (11) jeweils untereinander zentrisch symmetrisch und/oder untereinander gleich ausgebildet sind.

11. Zerkleinerungswerkzeug nach einem der Ansprüche 1 bis 10, **dadurch gekennzeichnet, dass** sich die an den Abweiser (5) anschließenden Förderflügel (6) bis zu einem Radialabstand (RA) vom Drehpunkt (2) erstrecken, der 30 bis 70 %, vorzugsweise 40 bis 60 %, des Radius (R') des Trägers (1) oder des Radius des Drehkreises des radial äußersten Endbereichs der Tragbalken (11) oder des Drehkreises des radial am weitesten außen liegenden Punkts (20) des äußersten Werkzeugs (4) beträgt und/oder dass die steg- oder leistenartigen Förderflügel (6, 6') gegenüber dem Träger (1) in einem Winkel von bis zu 45° in die oder gegen die Drehrichtung (13) geneigt sind.

12. Zerkleinerungswerkzeug nach einem der Ansprüche 1 bis 11, **dadurch gekennzeichnet, dass** die Förderflügel (6) und/oder die Förderflügel (6') zumindest über einen Abschnitt ihres Verlaufs, insbesondere über ihren gesamten Verlauf, im Querschnitt gesehen Höhenbereiche mit unterschiedlicher Neigung zum Träger (1) besitzen.

13. Zerkleinerungswerkzeug nach einem der Ansprüche 1 bis 12, **dadurch gekennzeichnet, dass** die Förderflügel (6, 6') zumindest über einen Abschnitt ihres radialen Verlaufs im Querschnitt einen sich über einen Längenbereich von 80 bis 100 %, vorzugsweise 90 %, der jeweiligen Gesamtlänge (L) der Förderflügel (6, 6') erstreckenden, senkrecht zur Oberfläche des Trägers (1) stehenden, insbesondere geraden Verlauf besitzenden, ersten Längenabschnitt (30) aufweisen, an den ein abgebogener, sich über einen Längenbereich von bis zu 20 % der jeweiligen Gesamtlänge L des Förderflügels (6, 6') erstreckender, einen geraden oder gekrümmten Querschnitt aufweisender, gegen die Drehrichtung (13) geneigter Abschnitt (31) anschließt, der mit einer Senkrechten (S) zum Träger (1) einen Winkel (α) von bis zu 45° einschließt.

14. Zerkleinerungswerkzeug nach einem der Ansprüche 1 bis 13, **dadurch gekennzeichnet,**
- **dass** die Förderflügel (6, 6') zumindest über einen Abschnitt ihres radialen Verlaufs in einem Querschnitt einen sich über einen Längenbereich von bis zu 20 % der jeweiligen Gesamtlänge (L) der Förderflügel (6, 6') erstreckenden, gegen die Drehrichtung (13) geneigten, gerade verlaufenden oder gekrümmten Querschnitt aufweisenden, Längenabschnitt (32) aufweisen, der mit einer Senkrechten (S) zum Träger (1) einen Winkel von bis zu 45° einschließt,
- **dass** an diesen Längenabschnitt (32) ein sich senkrecht zur Oberfläche des Trägers (1) erstreckender Mittelabschnitt (33) über einen Längenbereich von 60 bis 80 % der jeweiligen Gesamtlänge (L) der Förderflügel (6, 6') anschließt, und
- **dass** an diesen Mittelabschnitt (33) ein abgebogener, im Querschnitt gerader oder gekrümmter Endabschnitt (34) über einen Längenbereich von bis zu 20 % der jeweiligen Gesamtlänge (L) der Förderflügel (6, 6') anschließt, der in die oder gegen die Drehrichtung (13) geneigt ist und einen geraden oder gekrümmten Querschnitt aufweist und mit einer Senkrechten (S) zur Oberfläche des Trägers (1) einen Winkel (α) von bis zu 45° einschließt.

15. Zerkleinerungswerkzeug nach einem der Ansprüche 1 bis 14, **dadurch gekennzeichnet, dass** die Förderflügel (6, 6') ausgehend von ihrem Ausgangspunkt (22) und die anschließenden Werkzeuge (4) einen insbesondere durchwegs gekrümmten Verlauf ihrer in Drehrichtung (13) weisenden Vorderkanten und/oder -flächen besitzen, wobei die Krümmung durch einen Kreisbogen (42) mit einer Genauigkeit bzw. mit einem Maximalabstand von 10 % des Kreisbogenradius (R'") angenähert ist und der Kreisbogenradius (R'") 50 bis 80%, vorzugsweise 52 bis 75 %, des Radius (R') des Trägers (1) oder des Radius des Drehkreises des radial äußersten Endbereichs der Tragbalken (11) oder des Drehkreises des radial am weitesten außen liegenden Punkts (20) des äußersten Werkzeugs (4) beträgt.

16. Zerkleinerungswerkzeug nach einem der Ansprüche 1 bis 15, **dadurch gekennzeichnet, dass** die Förderflügel (6) radial von der Drehachse (B) ausgehen und bis zum Rand des Abweisers (5) dem Verlauf einer Geraden folgen, die eine Tangente an die Krümmung bzw. den Verlauf bzw. an die Vorderfront (41) der anschließenden Förderflügel (6) darstellt.

17. Zerkleinerungswerkzeug nach einem der Ansprüche 1 bis 16, **dadurch gekennzeichnet, dass** die Krümmung der von ihrem Ausgangspunkt (22) ausgehenden Förderflügel (6, 6') durch ihren Winkelabstand (W) zu einer voreilenden Radialen (R") angenähert ist, wobei ausgehend von der Drehachse (B)
- in einem Abstandsbereich (BE) von 5 bis 45 % des Radius (R') des Trägers (1) oder des Radius des Drehkreises des radial äußersten Endbereichs der Tragbalken (11) oder des Drehkreises des radial am weitesten außen liegenden Punkts (20) des äußersten Werkzeugs (4) der Winkelabstand (W) 0 bis 25°,
- in einem Abstandsbereich (BE) von 15 bis 90 % der Winkelabstand (W) 15 bis 40°,
- in einem Abstandsbereich (BE) von 35 bis 95 % der Winkelabstand (W) 30 bis 55°, und
- in einem Abstandsbereich (BE) von 65 bis 100 % der Winkelabstand (W) 45 bis 80°, vorzugsweise 45 bis 60°, beträgt.

18. Schneidverdichter mit einem Zerkleinerungswerkzeug nach einem der Ansprüche 1 bis 17.

19. Schneidverdichter nach Anspruch 18, **dadurch gekennzeichnet, dass** das Zerkleinerungswerkzeug im Inneren des Behälters (9) des Schneidverdichters angeordnet und von einer senkrecht zum Träger (1) bzw. zu der von den Förderflügeln (6) aufgespannten Ebene verlaufenden und vorzugsweise den Boden des Behälters (9) durchsetzenden Drehwelle (17) getragen ist und/oder dass die Drehachse (B) des Trägers (1) und die Achse der Drehwelle (17) zusammenfallen.

## Claims

1. Comminuting tool for plastic materials, wherein the comminuting tool can be driven in rotation, comprising a carrier (1), which can be rotated about an axis of rotation (B) located in the centre of the carrier and on the surface (3) of which are arranged tools (4) for processing and comminuting the plastics materials , wherein a deflector (5) is arranged in the region of the axis of rotation (B) of the carrier (1), wherein feeding blades (6) in the form of crosspieces or strips are arranged in a region of the carrier (1) which follows the deflector (5) radially, and the tools (4) are arranged in that region of the carrier (1) which follows the feeding blades (6) radially in the direction of the periphery (7).

2. Comminuting tool according to claim 1, **characterised in that** the feeding blades (6) originate from the deflector (5) or are connected to the latter.

3. Comminuting tool according to claim 1 or 2, **characterised in that** the tools (4) lie between the far end away from the axis of rotation (B) of the respective feeding blade (6) and the periphery (7) of the carrier (1) and/or that the tools (4) directly adjoin the respective feeding blade (6) or the tool lying further inside directly adjoins the far end away from the axis of rotation (B) of the respective feeding blade (6).

4. Comminuting tool according to any of claims 1 to 3, **characterised in that** the carrier (1) is formed by a disc (10) that carries the deflector (5), the feeding blades (6) and the tools (4) on a surface, or is formed by a central carrier part (12) and a plurality of carrier beams (11) originating from this central carrier part (12), wherein the central carrier part (12) supports the deflector (5) and optionally the feeding blades (6) and/or the carrier beams (12), the feeding blades (6) and the tools (4) and optionally the deflector (5).

5. Comminuting tool according to any of claims 1 to 4, **characterised in that** the deflector (5) has an outer contour that is rotationally symmetrical, preferably conical, cylindrical, frustoconical, cylindrical with conical attachment, or pyramidal or forms a cone-bearing cylinder and/or that the symmetry axis of the deflector (5) lies in the axis of rotation (B) and/or that the deflector (5) is inclined obliquely from its tip lying in the axis of rotation (B) or from its region surrounding the axis of rotation (B), said region being far from the surface of the carrier (1), towards the periphery (7) of the carrier (1) and/or that the deflector (5) has a continuously closed surface formed by a number of struts and/or plates forming the outer contour and/or that the feeding blades (6) originating from the deflector (5) in the direction towards the periphery (7) of the carrier (1) originate or protrude from the surface (3) of the carrier (1).

6. Comminuting tool according to any of claims 1 to 5, **characterised in that** the deflector (5) itself carries feeding blades (6') that originate from the surface (11) of the deflector (5) and are directed away from the carrier (1) and/or that the feeding blades (6') carried by the deflector (5) and the feeding blades (6) located between the deflector (5) and the tools directly adjoin one another or are integrally formed with each other and/or that the starting point (22) of the feeding blades (6') carried by the deflector (5) and the feeding blade (6) adjoining these feeding blades (6') lies in the axis of rotation (B) of the carrier (1) or in the middle point (21) of the deflector (5) or lies in a region between the axis of rotation (B) and/or the middle point (21) of the deflector (5) and the periphery of the deflector (5) at a predetermined distance from the axis of rotation (B).

7. Comminuting tool according to any of claims 1 to 6, **characterised in that** the feeding blades (6') in the region above the deflector (5) towards the periphery (7) have a straight or trailing curved course with respect to a radial (R") from their starting point (22) and/or that the feeding blades (6) extending between the deflector (5) and the periphery (7) of the carrier (1) have a straight or trailing curved course with respect to a radial (R").

8. Comminuting tool according to any of claims 1 to 7, **characterised in that** the height of the feeding blades (6, 6') and/or their carrier-far surface or edge (14) above the carrier (1) from their starting point (22) to the height of that very tool (4) that adjoins the respective feeding blade (6), in particular up to the height of the cutting surface (8) or the working surface of this tool (4), decreases and/or that the carrier-far edge (14) of the feeding blades (6, 6') relative to the surface (3) of the carrier (1) has a straight or a preferably parabolic, curved course or has successive straight and/or curved sections.

9. Comminuting tool according to any of claims 1 to 8, **characterised in that** the deflector (5) has a radius (R) from 5 to 45%, preferably from 15 to 40 %, of the radius (R') of the carrier (1) or of the radius of the turning circle of the radially outermost end region of the carrier beam (11) or the turning circle of the radially furthest outer point (20) of the outermost tool (4) and/or that the maximum height of the deflector (5) and/or of a starting point (22) of the feeding blades (6') above the carrier (1), lying in the rotation axis (B), is 10 to 90 %, preferably 30 to 80%, of the radius (R') of the carrier (1) or of the radius of the turning circle of the radially outermost end region of the carrier beams (11) or of the turning circle of the radially furthest point (20) of the outermost tool (4) and/or that cutting surfaces (8) facing in the direction of rotation (13) and/or work surfaces of the tools (4) adjoining the feeding blades (6) are disposed along a curved line that continues the course or the curvature of the feeding blades (6) and optionally trails a radial (R") of the carrier (1).

10. Comminuting tool according to any of claims 1 to 9, **characterised in that** the height (H) of the feeding blades (6, 6') relative to the level of the cutting surface (8) of the tools at a distance from its starting point (22) of 20 to 90%, preferably of 25 to 80% of the radius (R') of the carrier (1), of the radius of the turning circle of the radially outermost end region of the beams (11) or of the turning circle of the radially farthest outer point (20) of the outermost tool (8) from the axis of rotation (B) to the periphery (7) decreases by 35 to 70%, preferably 40 to 60%, and then decreases to the level of the cutting surface (8) of the tools (4) and/or that the feeding blades (6, 6') are at a right angle to the surface (3) of the carrier (1) or that the feeding blades (6) with respect to the surface (3) of the carrier (1) over at least a section of their height are inclined at an angle of up to 45° and/or that the feeding blades (6) at their base edge near the carrier are connected with a base surface (16), optionally also with the deflector (5), and optionally are fastened with this on the carrier (1) and/or that the radially outer edge of the cutting surface (8) or working surface of a respective inner tool (4) covers or protrudes the radially inner edge of the cutting surface (8) or working surface of the respective radially outward adjoining tool (4) viewed in the direction of rotation (13) and/or that the individual feeding blades (6, 6') and/or the tools (4) and/or the carrier beams (11) are each formed centrally symmetrically with each other and/or the same as each other.

11. Comminuting tool according to any of claims 1 to 10, **characterised in that** the feeding blades (6) adjoining the deflector (5) extend up to a radial distance (RA) from the pivot point (2) that is 30 to 70%, preferably 40 to 60%, of the radius (R') of the carrier (1) or of the radius of the turning circle of the radially outermost end region of the carrier beams (11) or of the turning circle of the radially farthest outer point (20) of the outermost tool (4) and/or that the feeding blades (6, 6') in the form of crosspieces or strips are inclined relative to the carrier (1) at an angle of up to 45° in or against the direction of rotation (13).

12. Comminuting tool according to any of claims 1 to 11, **characterised in that** the feeding blades (6) and/or the feeding blades (6') at least over a section of their course, in particular over their entire course, viewed in cross-section have height regions with different inclination to the carrier (1).

13. Comminuting tool according to any of claims 1 to 12, **characterised in that** the feeding blades (6, 6') have a first longitudinal section (30), at least over a section of their radial course in the cross-section, extending over a longitudinal region of 80 to 100%, preferably 90%, of the respective total length (L) of the feeding blades (6, 6'), standing perpendicularly to the surface of the carrier (1), in particular having a straight course, to which is adjoined a bent section (31) extending over a longitudinal region of up to 20% of the respective total length L of the feeding blade (6, 6'), having a straight or curved cross-section, inclined against the direction of rotation (13), said section enclosing an angle (α) of up to 45° with a perpendicular (S) to the carrier (1).

14. Comminuting tool according to any of claims 1 to 13, **characterised in that**
- the feeding blades (6, 6') have a longitudinal section (32), at least over a section of their radial course in a cross-section, extending over a longitudinal region of up to 20 % of the respective total length (L) of the feeding blades (6, 6'), inclined against the direction of rotation (13), having a straight or curved cross-section, said section enclosing an angle of up to 45° with a perpendicular (S) to the carrier (1),
- adjoining this longitudinal section (32) over a longitudinal region of 60 to 80% of the respective total length (L) of the feeding blades (6, 6') is a middle section (33) extending perpendicularly to the surface of the carrier (1), and
- adjoining this middle section (33) over a longitudinal region of up to 20% of the respective total length (L) of the feeding blades (6, 6') is a bent end section (34), straight or curved in cross-section, inclined in or against the direction of rotation (13) and having a straight or curved cross-section, said section enclosing an angle (α) of up to 45° with a perpendicular (S) to the surface of the carrier (1).

15. Comminuting tool according to any of claims 1 to 14, **characterised in that** the feeding blades (6, 6') originating from their starting point (22) and the adjoining tools (4) have a particularly, consistently curved course of their leading edges and/or surfaces facing in the direction of rotation (13), wherein the curvature is approximated by a circular arc (42) with an accuracy or with a maximum distance of 10% of the circular arc radius (R'") and the circular arc radius (R'") is 50 to 80%, preferably 52 to 75% of the radius (R') of the carrier (1) or of the radius of the turning circle of the radially outermost end region of the carrier beams (11) or of the turning circle of the radially outermost point (20) of the outermost tool (4).

16. Comminuting tool according to any of claims 1 to 15, **characterised in that** the feeding blades (6) extend radially from the axis of rotation (B) and follow the course of a straight line to the periphery of the deflector (5), said line representing a tangent to the curvature or course or the front (41) of the adjoining feeding blades (6).

17. Comminuting tool according to any of claims 1 to 16, **characterised in that** the curvature of the feeding blades (6, 6') originating from their starting point (22) is approximated by their angular distance (W) from a leading radial (R"), wherein originating from the axis of rotation (B),
- in a distance region (BE) of 5 to 45% of the radius (R') of the carrier (1) or of the radius of the turning circle of the radially outermost end region of the carrier beams (11) or of the turning circle of the radially outermost point (20) of the outermost tool (4), the angular distance (W) is 0 to 25°,
- in a distance region (BE) of 15 to 90%, the angular distance (W) is 15 to 40°,
- in a distance region (BE) of 35 to 95%, the angular distance (W) is 30 to 55°, and
- in a distance region (BE) of 65 to 100%, the angular distance (W) is 45 to 80°, preferably 45 to 60°.

18. Cutting compactor with a comminuting tool according to any of claims 1 to 17.

19. Cutting compactor according to claim 18, **characterised in that** the comminuting tool is disposed inside the container (9) of the cutting compactor and is carried by a rotary shaft (17) running perpendicularly to the carrier (1) or to the plane spanned by the feeding blades (6) and preferably passing through the bottom of the container (9) and/or that the axis of rotation (B) of the carrier (1) and the axis of the rotary shaft (17) coincide.

## Revendications

1. Outil de fragmentation pour des matériaux plastiques, lequel outil de fragmentation peut être entraîné dans un mouvement de rotation, comprenant un support (1), qui est rotatif autour d'un axe de rotation (B) situé au centre de celui-ci et sur la surface (3) duquel des outils (4) sont agencés en vue du traitement et de la fragmentation des matériaux plastiques, dans lequel un déflecteur (5) est agencé dans la zone de l'axe de rotation (B) du support (1), dans lequel des ailettes transporteuses (6) en forme de traverse ou de baguette sont agencées dans une zone du support (1) qui se raccorde radialement au déflecteur (5) et les outils (4) sont agencés dans la zone qui se raccorde aux ailettes transporteuses (6) radialement vers le bord (7) du support (1).

2. Outil de fragmentation selon la revendication 1, **caractérisé en ce que** les ailettes transporteuses (6) partent du déflecteur (5) ou sont reliées à celui-ci.

3. Outil de fragmentation selon la revendication 1 ou 2, **caractérisé en ce que** les outils (4) se trouvent entre l'extrémité, éloignée de l'axe de rotation (B), de l'ailette transporteuse (6) respective et le bord (7) du support (1) et/ou **en ce que** les outils (4) se raccordent directement à l'ailette transporteuse (6) respective ou l'outil se trouvant plus à l'intérieur se raccorde directement à l'extrémité, éloignée de l'axe de rotation (B), de l'ailette transporteuse (6) respective.

4. Outil de fragmentation selon l'une quelconque des revendications 1 à 3, **caractérisé en ce que** le support (1) est formé par un disque (10) qui supporte sur une surface le déflecteur (5), les ailettes transporteuses (6) et les outils (4) ou est formé par une partie porteuse (12) centrale et par une pluralité de barres porteuses (11) partant de cette partie porteuse centrale (12), la partie porteuse centrale (12) portant le déflecteur (5) et éventuellement les ailettes transporteuses (6) et/ou les barres porteuses (12) portant les ailettes transporteuses (6) et les outils (4) et éventuellement le déflecteur (5).

5. Outil de fragmentation selon l'une quelconque des revendications 1 à 4, **caractérisé en ce que** le déflecteur (5) présente un contour extérieur symétrique en rotation, de préférence en forme de cône, en forme de cylindre, en forme de cône tronqué, en forme de cylindre avec un chapeau en forme de cône, ou un contour extérieur en forme de pyramide, ou forme un cylindre portant un cône et/ou **en ce que** l'axe de symétrie du déflecteur (5) se situe dans l'axe de rotation (B) et/ou **en ce que** le déflecteur (5) est incliné à partir de sa pointe située dans l'axe de rotation (B) ou de sa zone entourant l'axe de rotation (B) et éloignée de la surface du support (1) jusqu'au bord (7) du support (1) et/ou **en ce que** le déflecteur (5) a une surface fermée continue ou une surface formée d'un certain nombre de barres et/ou de plaques formant le contour extérieur et/ou **en ce que** les ailettes transporteuses (6) partant du déflecteur (5) en direction du bord (7) du support (1) partent ou dépassent de la surface (3) du support (1).

6. Outil de fragmentation selon l'une quelconque des revendications 1 à 5, **caractérisé en ce que** le déflecteur (5) porte lui-même des ailettes transporteuses (6') qui partent de la surface (11) du déflecteur (5) et qui s'écartent du support (1) et/ou **en ce que** les ailettes transporteuses (6') portées par le déflecteur (5) et les ailettes transporteuses (6) placées entre le déflecteur (5) et les outils se raccordent directement l'une à l'autre ou sont formées d'un seul tenant ensemble et/ou **en ce que** le point de départ (22) des ailettes transporteuses (6') portées par le déflecteur (5) et des ailettes transporteuses (6) se raccordant à ces ailettes transporteuses (6') se trouve dans l'axe de rotation (B) du support (1) ou au centre (21) du déflecteur (5) ou dans une zone entre l'axe de rotation (B) ou le centre (21) du déflecteur (5) et le bord du déflecteur (5) à une distance prédéterminée de l'axe de rotation (B).

7. Outil de fragmentation selon l'une quelconque des revendications 1 à 6, **caractérisé en ce que** les ailettes transporteuses (6') ont, dans la zone au-dessus du déflecteur (5) en direction du bord (7), une allure droite ou une allure courbe en arrière à partir de leur point de départ (22) par rapport à une ligne radiale (R") et/ou **en ce que** les ailettes transporteuses (6) s'étendant entre le déflecteur (5) et le bord (7) du support (1) ont une allure droite ou une allure en arrière par rapport à une ligne radiale (R").

8. Outil de fragmentation selon l'une quelconque des revendications 1 à 7, **caractérisé en ce que** la hauteur des ailettes transporteuses (6, 6') ou de leur surface ou arête (14) éloignée du support au-dessus du support (1) diminue de leur point de départ (22) jusqu'à la hauteur de leur outil (4) qui se raccorde à l'ailette transporteuse (6) respective, en particulier jusqu'à la hauteur de la surface de coupe (8) ou de la surface de travail de cet outil (4) et/ou **en ce que** l'arête (14), éloignée du support, des ailettes transporteuses (6, 6') a, par rapport à la surface (3) du support (1), une allure droite ou une allure courbe, de préférence parabolique, ou a des tronçons successifs droits et/ou courbes.

9. Outil de fragmentation selon l'une quelconque des revendications 1 à 8, **caractérisé en ce que** le déflecteur (5) a un rayon (R) de 5 à 45 %, de préférence de 15 à 40 %, du rayon (R') du support (1) ou du rayon du cercle de rotation de la zone terminale, radialement le plus à l'extérieur, des barres porteuses (11) ou du cercle de rotation du point (20), radialement le plus à l'extérieur, de l'outil (4) le plus à l'extérieur et/ou **en ce que** la hauteur maximale du déflecteur (5) et/ou d'un point de départ (22), situé dans l'axe de rotation (B), des ailettes transporteuses (6') au-dessus du support (1) atteint 10 à 90 %, de préférence 30 à 80 %, du rayon (R') du support (1) ou du rayon du cercle de rotation de la zone terminale, radialement le plus à l'extérieur, des barres porteuses (11) ou du cercle de rotation du point (20), radialement le plus à l'extérieur, de l'outil (4) le plus à l'extérieur et/ou **en ce que** les surfaces de coupe (8) dirigées dans le sens de rotation (13) et/ou les surfaces de travail des outils (4) se raccordant aux ailettes transporteuses (6) sont agencées le long d'une ligne courbe qui suit l'allure ou la courbure des ailettes transporteuses (6) et est éventuellement en arrière par rapport à une ligne radiale (R") du support (1).

10. Outil de fragmentation selon l'une quelconque des revendications 1 à 9, **caractérisé en ce que** la hauteur (H) des ailettes transporteuses (6, 6') par rapport au niveau de la surface de coupe (8) des outils à une distance de leur point de départ (22) de 20 à 90 %, de préférence de 25 à 80 %, du rayon (R') du support (1) ou du rayon du cercle de rotation de la zone terminale, radialement le plus à l'extérieur, des barres (11) ou du cercle de rotation du point (20), radialement le plus à l'extérieur, de l'outil (8) le plus à l'extérieur diminue, de l'axe de rotation (B) au bord (7), de 35 à 70 %, de préférence de 40 à 60 %, et diminue ensuite au niveau de la surface de coupe (8) des outils (4) et/ou **en ce que** les ailettes transporteuses (6, 6') se dressent à angle droit par rapport à la surface (3) du support (1) ou les ailettes transporteuses (6) sont inclinées par rapport à la surface (3) du support (1) sur au moins un tronçon de leur hauteur selon un angle allant jusqu'à 45° et/ou **en ce que** les ailettes transporteuses (6) sont reliées au niveau de leur arête de base proche du support à une surface de base (16) le cas échéant aussi reliée au déflecteur (5) et sont fixées le cas échéant à celle-ci au support (1) et/ou **en ce que** l'arête radialement extérieure de la surface de coupe (8) ou de la surface de travail d'un outil (4) respectivement intérieur recouvre ou dépasse l'arête radialement intérieure de la surface de coupe (8) ou de la surface de travail de l'outil (4) respectivement radialement à raccorder vers l'extérieur, vu dans le sens de rotation (13), et/ou **en ce que** les ailettes transporteuses (6, 6') individuelles et/ou les outils (4) et/ou les barres porteuses (11) sont conçues à chaque fois symétriques entre elles par rapport au centre et/ou identiques entre elles.

11. Outil de fragmentation selon l'une quelconque des revendications 1 à 10, **caractérisé en ce que** les ailettes transporteuses (6) se raccordant au déflecteur (5) s'étendent jusqu'à une distance radiale (RA) du point de rotation (2) qui atteint 30 à 70 %, de préférence 40 à 60 %, du rayon (R') du support (1) ou du rayon du cercle de rotation de la zone terminale, radialement le plus à l'extérieur, des barres porteuses (11) ou du cercle de rotation du point (20), radialement le plus à l'extérieur, de l'outil (4) le plus à l'extérieur et/ou **en ce que** les ailettes transporteuses (6, 6') du type traverse ou baguette sont inclinées par rapport au support (1) selon un angle allant jusqu'à 45° dans le sens de rotation ou dans le sens contraire du sens de rotation (13).

12. Outil de fragmentation selon l'une quelconque des revendications 1 à 11, **caractérisé en ce que** les ailettes transporteuses (6) et/ou les ailettes transporteuses (6') ont, au moins sur une section de leur étendue, en particulier sur toute leur étendue, des zones en hauteur, vues en section transversale, avec une inclinaison différente par rapport au support (1).

13. Outil de fragmentation selon l'une quelconque des revendications 1 à 12, **caractérisé en ce que** les ailettes transporteuses (6, 6') présentent, au moins sur une section de leur étendue radiale en section transversale, un premier tronçon de longueur (30) qui s'étend sur une plage de longueur de 80 à 100 %, de préférence de 90 %, de la longueur totale respective (L) des ailettes transporteuses (6, 6'), qui se dresse perpendiculairement à la surface du support (1), qui a en particulier une étendue droite et auquel se raccorde un tronçon (31) replié, qui s'étend sur une zone de longueur allant jusqu'à 20% de la longueur totale L respective de l'ailette transporteuse (6, 6'), qui présente une section transversale droite ou courbe, qui est incliné dans le sens contraire du sens de rotation (13) et qui forme avec une perpendiculaire (S) au support (1) un angle (α) allant jusqu'à 45°.

14. Outil de fragmentation selon l'une quelconque des revendications 1 à 13, **caractérisé en ce que**
- les ailettes transporteuses (6, 6') comportent au moins sur une section de leur étendue radiale en section transversale un tronçon de longueur (32) qui s'étend sur une zone de longueur allant jusqu'à 20 % de la longueur totale (L) respective des ailettes transporteuses (6, 6'), qui est incliné dans le sens contraire du sens de rotation (13), qui présente une section transversale droite ou courbe et qui forme avec une perpendiculaire (S) au support (1) un angle allant jusqu'à 45°,
- ce tronçon de longueur (32) est suivi d'un tronçon médian (33) s'étendant perpendiculairement à la surface du support (1) sur une zone de longueur de 60 à 80 % de la longueur totale (L) respective des ailettes transporteuses (6, 6'), et
- ce tronçon médian (33) est suivi d'un tronçon terminal (34) replié, à la section transversale droite ou courbe, sur une zone de longueur allant jusqu'à 20% de la longueur totale (L) respective des ailettes transporteuses (6, 6'), qui est incliné dans le sens de rotation ou dans le sens contraire du sens de rotation (13) et qui a une section transversale droite ou courbe et qui forme avec une perpendiculaire (S) à la surface du support (1) un angle (α) allant jusqu'à 45°.

15. Outil de fragmentation selon l'une quelconque des revendications 1 à 14, **caractérisé en ce que** les ailettes transporteuses (6, 6') ont à partir de leur point de départ (22) et les outils raccordés (4) ont une allure en particulier toujours courbe de leurs arêtes avant et/ou surfaces avant dirigées dans le sens de rotation (13), laquelle courbure se rapproche r d'un arc de cercle (42) avec une précision ou avec un écart maximal de 10 % du rayon d'arc de cercle (R'") et le rayon d'arc de cercle (R'") atteint 50 à 80 %, de préférence 52 à 75 %, du rayon (R') du support (1) ou du rayon du cercle de rotation de la zone terminale, radialement le plus à l'extérieur, des barres porteuses (11) ou du cercle de rotation du point (20), radialement le plus à l'extérieur, de l'outil (4) le plus à l'extérieur.

16. Outil de fragmentation selon l'une quelconque des revendications 1 à 15, **caractérisé en ce que** les ailettes transporteuses (6) partent radialement de l'axe de rotation (B) et suivent jusqu'au bord du déflecteur (5) l'allure d'une droite qui représente une tangente à la courbure ou à l'allure ou à la face avant (41) de l'ailette transporteuse raccordée (6).

17. Outil de fragmentation selon l'une quelconque des revendications 1 à 16, **caractérisé en ce que** la courbure de l'ailette transporteuse (6, 6') partant de leur point de départ (22) se rapproche par leur distance angulaire (W) d'une ligne radiale en avant (R") et, à partir de l'axe de rotation (B),
- dans une zone de distance (BE) de 5 à 45 % du rayon (R') du support (1) ou du rayon du cercle de rotation de la zone terminale, radialement la plus à l'extérieur, des barres porteuses (11) ou du cercle de rotation du point (20), radialement le plus à l'extérieur, de l'outil (4) le plus à l'extérieur, la distance angulaire (W) atteint 0 à 25°,
- dans une zone de distance (BE) de 15 à 90 %, la distance angulaire (W) atteint 15 à 40°,
- dans une zone de distance (BE) de 35 à 95 %, la distance angulaire (W) atteint 30 à 55°, et
- dans une zone de distance (BE) de 65 à 100 %, la distance angulaire (W) atteint 45 à 80°, de préférence 45 à 60°.

18. Compacteur de coupe avec un outil de fragmentation selon l'une quelconque des revendications 1 à 17.

19. Compresseur de coupe selon la revendication 18, **caractérisé en ce que** l'outil de fragmentation est agencé à l'intérieur du récipient (9) du compresseur de coupe et est porté par un arbre de rotation (17) qui s'étend perpendiculairement au support (1) ou au plan passant par les ailettes transporteuses (6) et qui traverse de préférence le fond du récipient (9) et/ou **en ce que** l'axe de rotation (B) du support (1) et l'axe de l'arbre de rotation (17) coïncident.
